# EUROPÄISCHE PATENTSCHRIFT

(11) **EP 1 507 687 B1**
(45) Veröffentlichungstag und Bekanntmachung des Hinweises auf die Patenterteilung: **14.06.2006**
(21) Anmeldenummer: 03744707.5
(22) Anmeldetag: 13.02.2003
(51) Int. Cl.: B60R 22/46

(54) **VERFAHREN UND VORRICHTUNG ZUR ANSTEUERUNG EINES RÜCKHALTEMITTELS IN EINEM FAHRZEUG**
METHOD AND DEVICE FOR ACTUATING A RESTRAINING MEANS IN A VEHICLE
PROCEDE ET DISPOSITIF POUR AMORCER UN DISPOSITIF DE RETENUE DANS UN VEHICULE

(30) Priorität: 22.03.2002 DE 10212996; 25.05.2002 DE 10223363
(43) Veröffentlichungstag der Anmeldung: 23.02.2005
(73) Patentinhaber: ROBERT BOSCH GMBH, 70442 Stuttgart (DE)
(72) Erfinder: THEISEN, Marc, 74354 Besigheim (DE)
(86) Internationale Anmeldenummer: PCT/DE2003/000426
(87) Internationale Veröffentlichungsnummer: WO 2003/080405

(56) Entgegenhaltungen:
- EP-A- 1 122 136
- DE-A- 19 754 220
- JP-A- 7 081 520

## Beschreibung

### Stand der Technik

Die Erfindung geht aus von einem Verfahren bzw. einer Vorrichtung zur Ansteuerung eines Rückhaltemittels in einem Fahrzeug nach der Gattung der unabhängigen Patentansprüche.

Derzeit sind nur irreversible pyrotechnische und reversible elektrische Rückhaltemittel bekannt. Wenn im Folgenden von Gurtstraffern gesprochen wird, so stehen diese stellvertretend für reversible Rückhaltemittel. Die Ansteuerung der pyrotechnischen Gurtstraffer erfolgt über ein Verfahren, welches die durch den Aufprall verursachten Verzögerungssignale auswertet. Desweiteren sind Methoden bekannt, welche die Ansteuerung eines elektrischen Gurtstraffers berechnen und welche den Gurtstraffer aufgrund von Fahrdynamikdaten auslösen. Ein Verfahren zur Ansteuerung eines elektrischen Gurtstraffers, welches in der Lage ist den Gurtstraffer aufgrund entgegenkommender Objekte zu betätigen, ist derzeit nicht bekannt.

Pyrotechnische Gurtstraffer sind irreversibel. Sie werden also erst während eines Aufpralls gezündet. Bei einem solchen Aufprall wirken auf die Insassen relativ große Verzögerungen. Damit ist es mit herkömmlichen Gurtstraffern nicht möglich den Insassen vor dem Aufprall in der optimalen Sitzposition zu fixieren.

Da elektrische Gurtstraffer reversibel sind, können sie auch schon vor einem möglichen Aufprall betätigt werden. Mit dem auf den Fahrdynamikdaten beruhenden Verfahren ist es möglich, reversible Gurtstraffer auszulösen, aber dieses Verfahren greift nur, wenn es die Fahrdynamik erfordert, beispielsweise wenn das Fahrzeug auszubrechen droht. Dieses Verfahren reagiert aber nicht, wenn das Fahrzeug sich noch im normalen Fahrzustand befindet, ihm plötzlich ein Objekt entgegenkommt und ein Aufprall bevorsteht. Das im Folgenden vorgestellte Verfahren versucht also in Situationen zu reagieren, in denen ein Objekt sich dem Fahrzeug so nähert, dass es zu einem Aufprall kommen wird, und das Verfahren beabsichtigt den Insassen in der optimalen Sitzposition zu fixieren.

Aus EP 1122 136 A2 ,die dem Oberbegriff den Ansprüche 1 and 2 entsprucht, ist es bereits bekannt, mit Hilfe einer vorausschauenden Sensorik ein Auslösekriterium für eine Gurtstraffer abzuleiten. Dabei kann die Kraft, mit der der Gurtstraffer betätigt wird, vom Abstand in der Relativgeschwindigkeit zwischen den Fahrzeugen abhängen und diese Parameter werden mit der vorausschauenden Sensorik erfasst. Aufgabe der Erfinfung ist es, eine Permanente Aktivierung des Rückhaltemittels zu vermeiden. Diese Aufgabe wird erfindungsgemäss durch die Merkmale des Kennzeichnenden Teils des Anspruchs 1 bzw. 2 gelöst.

### Vorteile der Erfindung

Es werden die von der Precrash-Sensorik gemessenen Informationen ausgewertet, reversible Rückhaltemittel angesteuert und eine Komfortfunktionalität zur Verfügung gestellt, so dass die Gurtkraft reduziert wird, falls von der Sensorik periodisch Objekte erkannt werden, die auf das Fahrzeug aufzuprallen drohen. Eine solche Situation tritt beispielsweise dann auf, wenn ein Fahrzeug relativ dicht an den Barken einer Autobahnbaustelle vorbeifährt. Aufgrund der Messungenauigkeit der Sensorik kann nicht eindeutig festgestellt werden, ob die Barke das Fahrzeug trifft oder nicht. Da die Gefahr besteht, dass es zu einem Aufprall kommt, muss das reversible Rückhaltemittel aktiviert werden. Erstens ist es aber für den Insassen sehr unangenehm, wenn beispielsweise der Gurtstraffer permanent anzieht, und zweitens droht dabei für den Gurtstraffer eine Überbeanspruchung und damit ein erhöhter Verschleiß. Wenn also über einen gewissen Zeitraum von der Precrash-Sensorik periodisch die gleichen Daten erhoben werden, kann davon ausgegangen werden, dass der Fahrer die Situation erkannt hat, und es kann die Intensität des Rückhaltemittels, beispielsweise also die Kraft des Gurtstraffers, reduziert werden. Sollte aber plötzlich ein nichtperiodisches Objekt auftreten, so dass eine erhöhte Gurtkraft erforderlich ist, wird die Absenkung der Gurtkraft sofort aufgehoben. Damit ist ein Sicherheitsverlust durch eine sich plötzlich ändernde Situation ausgeschlossen.

Im Zusammenspiel mit der entsprechenden Sensorik, beispielsweise sei hier die Precrash-Sensorik erwähnt, und der entsprechenden Aktuatorik, den reversiblen Rückhaltemitteln, bietet sich der Vorteil, dass der Insasse in der optimalen Sitzposition gehalten werden kann, wenn ein Objekt auf das Fahrzeug aufzuprallen droht. Desweiteren bietet dieses Sicherheitssystem den Vorteil, dass die Intensität des Rückhaltemittels reduziert wird, wenn davon ausgegangen werden kann, dass der Fahrer die Situation erkannt hat. Die Schutzwirkung des Systems wird aber nicht verringert.

Weitere Vorteile ergeben sich aus der Beschreibung von Ausführungsbeispielen bzw. den abhängigen Ansprüchen.

### Zeichnung

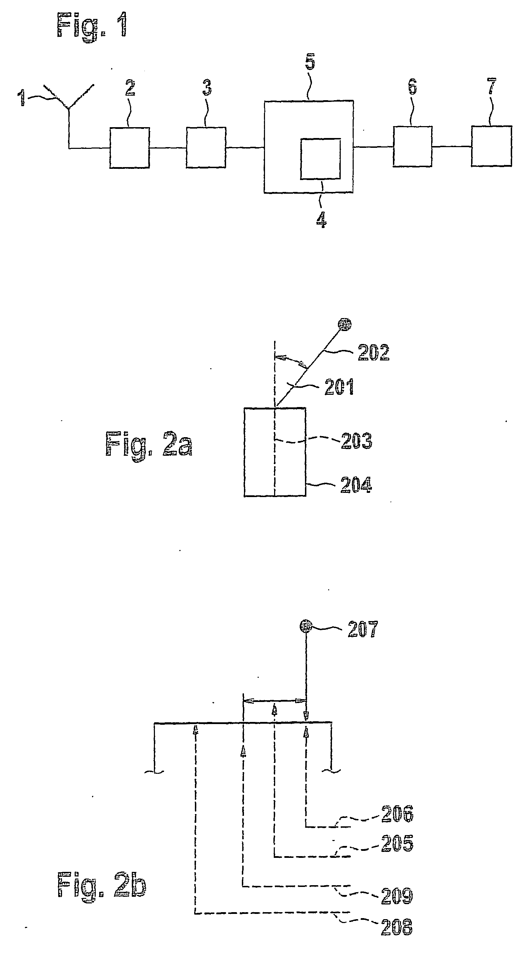

Die Erfindung wird nachstehend anhand der in den Figuren 1 bis 7 dargestellten Ausführungsbeispielen näher erläutert. Figur 1 stellt ein Blockschaltbild der erfindungsgemäßen Vorrichtung dar.

### Beschreibung von Ausführungsbeispielen

In Figur 1 ist als Blockschaltbild die erfindungsgemäße Vorrichtung dargestellt. Eine Antenne 1 eines Precrash-Sensors ist mit einer Sende-/Empfangsstation 2 verbunden, die auch Signale erzeugt, also einen Oszillator aufweist, um die Radarsignale zu erzeugen. Hier ist es demnach eine Mikrowellen-Sende-/-Empfangsstation, so dass die Antenne 1, die als Sende-/Empfangsantenne wirkt, zusammen mit der Sende-/Empfangsstation 2 einen Radarsensor bildet. Der Einfachheit halber ist hier nur ein Radarsensor angegeben. Ein Fahrzeug kann jedoch mehr als einen Radarsensor aufweisen. Alternativ zum Radarsensor kann auch ein Videosensor, ein Ultraschallsensor, ein Infrarotsensor, ein Laser, etc. bzw. Kombinationen aus diesen verwendet werden. Der Sende-/Empfangsstation 2 ist eine Signalverarbeitung 3 nachgeschaltet, die die Empfangssignale der Sende-/Empfangsstation 2 auswertet und damit die Aufprallgeschwindigkeit, den Aufprallzeitpunkt, den Versatz und den Auftreffwinkel des erkannten Objekts bestimmt. Diese Daten werden dann von der Signalverarbeitung 3 an den ersten Dateneingang eines Prozessors 4 übertragen. Diese Leitung kann entweder eine Zweidrahtleitung, eine optische Leitung oder ein Bus sein. Die Signalverarbeitung 3 beziehungsweise deren Aufgaben können entweder der Sende-/Empfangsstation 2, dem Prozessor 4 oder einem weiteren davon unabhängigen Prozessor (in Figur 1 nicht dargestellt) zugeordnet werden. Hier bilden die Antenne 1, die Sende-/Empfangsstation 2 und die Signalverarbeitung 3 die Precrashsensorik.

Der Prozessor 4 ist entweder ein separates Steuergerät oder ist in ein Steuergerät 5, beispielsweise in das Airbagsteuergerät, integriert. An dieses Steuergerät 5 ist eine Rückhaltemittelansteuerung 6 angeschlossen, die wiederum die Rückhaltemittel 7 ansteuert. Als Rückhaltemittel 7 sind reversible Rückhaltemittel wie beispielsweise reversible elektrische Gurtstraffer in einem Fahrzeug vorhanden. Beispielhaft ist hier wiederum nur ein Rückhaltemittel dargestellt. Die Rückhaltemittelansteuerung 6 kann mehr als ein Rückhaltemittel ansteuern. Die Verbindung zwischen dem Airbagsteuergerät 5 und der Rückhaltemittelansteuerung 6 kann über einen Bus, eine Zweidrahtleitung, eine optische Faser, eine magnetische Kopplung oder eine Funkübertragung erfolgen.

Das im Folgenden beschriebene Verfahren läuft in Prozessor 4 ab. Der Prozessor 4 dient demnach als Steuereinheit.

Ziel ist es aus dem Versatz, dem Auftreffwinkel, dem Betrag der Aufprallgeschwindigkeit und dem Aufprallzeitpunkt die Gurtkraft zu berechnen. Dabei soll berücksichtigt werden, dass bei sich wiederholenden Ereignissen die Gurtkraft reduziert werden kann, beispielsweise um die Hälfte. Das Verfahren kann analog angewendet werden, wenn anstatt des Auftreffwinkels und des Betrags des Vektors der Aufprallgeschwindigkeit die Geschwindigkeitskomponente in Richtung der Fahrzeuglängs- und der Fahrzeugquerachse benutzt wird. Im Folgenden wird davon ausgegangen, dass der Auftreffwinkel und der Betrag der Aufprallgeschwindigkeit zur Verfügung gestellt werden (vgl. z.B. auch DE 198 54 380 A1).

Wenn keine Aufprallgeschwindigkeit und kein Aufprallzeitpunkt gemessen werden, dann liegt kein Objekt vor, welches zu einem Crash führen könnte. Dies muss von dem Fall unterschieden werden, dass diese Parameter den Wert 0 haben. Dies bedeutet nämlich, dass sich ein Objekt vor dem Fahrzeug mit der gleichen Geschwindigkeit bewegt.

Wenn die Aufprallgeschwindigkeit unterhalb einer bestimmten sehr geringen Schwelle liegt, dann wird der Gurtstraffer nicht betätigt.

Falls die Relativgeschwindigkeit die Schwelle überschreitet, dann wird die Gurtkraft von der Relativgeschwindigkeit nur dadurch beeinflusst, dass der von der Fahrzeugmitte aus gemessene minimal einzuhaltende Abstand eines Vorbeifahrers von der Relativgeschwindigkeit abhängt. Je langsamer man nämlich an einem Objekt mit dem gleichen Abstand von der Fahrzeugmitte vorbeifährt, desto weniger kritisch ist es, dass das Objekt das Fahrzeug trifft. Umgekehrt gilt: Je höher die Relativgeschwindigkeit ist, desto größer muss der minimale Abstand von der Fahrzeugmitte sein, den ein Objekt mindestens haben muss, so dass eine sichere Vorbeifahrt gewährleistet ist.

Unter dem Auftreffwinkel 201 versteht man den Winkel zwischen der Fahrzeuglängsachse 203 und der Trajektorie 202 des Objekts (siehe Figur 2a). Je kleiner also der Auftreffwinkel, desto größer ist die Verzögerung, die das Fahrzeug 204 durch den Objektaufprall erfährt, und desto stärker muss der Gurt angezogen werden.

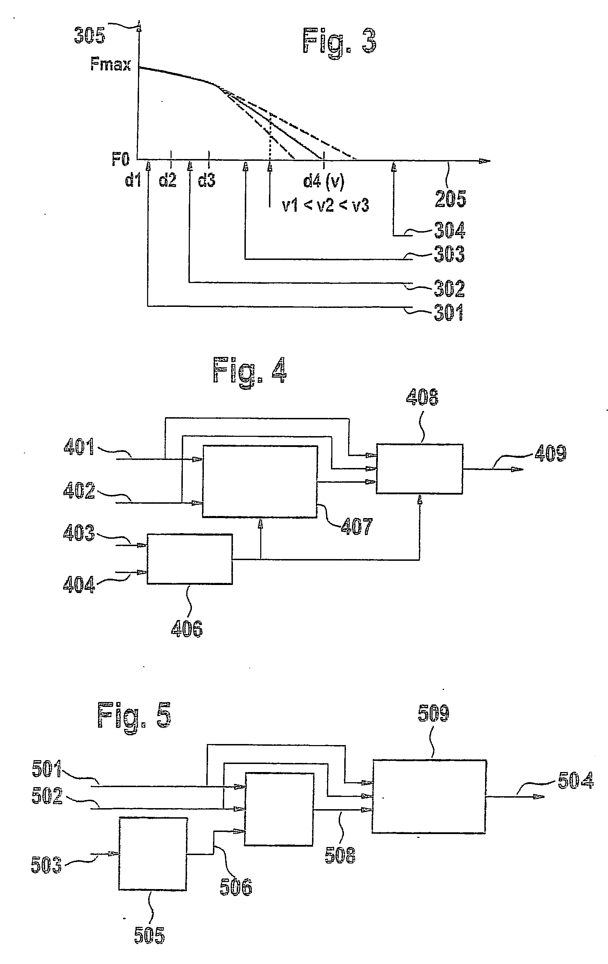

Der Versatz 205 ist der Abstand des Aufprallorts 206 beim Objekt 207 von der Fahrzeuglängsachse 209 (siehe Figur 2b). Um den Zusammenhang zwischen der Gurtkraft 305 und dem Versatz 205 darzustellen, werden mehrere Fälle unterschieden. Dies umfasst auch die Variante, dass die Gurtkraft 305 in allen Fällen gleich ist, dass also keine Fälle unterschieden werden. Zur Vereinfachung wird nur die rechte Fahrzeughälfte betrachtet (siehe Figur 3). Bei einer Fallunterscheidung können dies beispielsweise die folgenden 4 Fälle 301-304 sein:
1. Fall 301: Der Versatz d1 ist größer oder gleich 0 und kleiner oder gleich der halben Fahrzeugbreite. Da in dieser Zone das Fahrzeug besonders steif ist, muss die Gurtkraft (Fmax) in diesem Fall am höchsten sein.
2. Fall 302: Der Versatz d2 ist größer als die halbe Rahmenbreite und kleiner oder gleich der halben Fahrzeugbreite. Das Objekt trifft also das Fahrzeug sicher. Je kleiner der Versatz ist, desto härter ist das Fahrzeug, desto größer die Verzögerung und desto größer muss die Gurtkraft sein.
3. Fall 303: Der Versatz d3 ist größer als die halbe Fahrzeugbreite und kleiner oder gleich dem Abstand, der eingehalten werden muss, dass die Sensorik unter Berücksichtigung der Messtoleranzen eine sichere Vorbeifahrt detektieren kann. Je geringer der gemessene Versatz ist, desto höher ist die Wahrscheinlichkeit, dass das Objekt das Fahrzeug trifft, desto höher muss die Gurtkraft gewählt werden.
4. Fall 304: Der Versatz d4 ist größer als der Abstand, der zur Detektion eines sicheren Vorbeifahrers erforderlich ist, und er ist kleiner oder gleich dem maximal berücksichtigten Abstand. Das Objekt trifft also das Fahrzeug mit Sicherheit nicht. Der Gurtstraffer muss also nicht betätigt werden.

Die Gurtkraftkennlinie ist also eine Funktion des Auftreffwinkels 305 und des Versatzes 205. Bei einem festen Winkel ist die Kraft eine wie oben dargestellt abschnittsweise definierte Funktion des Versatzes. Die Kraft ist in den Fällen, in denen das Objekt sicher trifft bzw. nicht trifft, unabhängig von der Geschwindigkeit. Die Kraft hängt nur in dem Bereich von der Geschwindigkeit ab, in dem nicht mit Sicherheit festgestellt werden kann, ob das Objekt trifft oder nicht. Der Bereich ist um so breiter, höher die Geschwindigkeit ist. Wie in Figur 3 zu sehen ist, nimmt in diesem Bereich die Kraft bei festem Versatz mit der Geschwindigkeit zu. Dies ist sinnvoll, da mit höherer Geschwindigkeit das Gefahrenpotenzial zunimmt. Diese Methode gestattet es auch, dass dieser Bereich ab einer bestimmten Geschwindigkeit nicht mehr zunimmt, da man erstens gegebenenfalls davon ausgehen kann, dass der Fahrer mit Sicherheit vorbeifährt, und da man so die Gurtkraft mit der höher werdenden Geschwindigkeit nicht weiter vergrößert und somit den Komfort erhöht.

Figur 4 zeigt das Diagramm des Verfahrens, so wie es in Prozessor 4 in Figur 1 abläuft. Eingangsgrößen sind der Versatz 401, der Auftreffwinkel 402, die Aufprallgeschwindigkeit 403 und der Aufprallzeitpunkt 404. Falls nicht der Versatz und der Auftreffwinkel, sondern die Geschwindigkeit in Fahrzeuglängs- und Fahrzeugquerrichtung die Eingangsgrößen sind, so muss eine zusätzliche Einheit zur Umrechnung der Eingangsgrößen benutzt werden. Im Folgenden wird davon ausgegangen, dass Winkel und Versatz gegeben sind. Die Ausgangsgröße des gesamten Verfahrens ist die Gurtkraft 405. Zur Angabe der Gurtkraft gibt es mehrere mögliche Varianten. Zwei mögliche Varianten sind beispielsweise, dass entweder das Ausgangssignal die Kraft direkt definiert oder dass das Signal den Betrag der Erhöhung oder der Erniedrigung der Kraft angibt. Beide Varianten können durch ein zusätzliches Modul in einander umgerechnet werden. Im Folgenden wird davon ausgegangen, dass das Ausgangssignal direkt die Kraft angibt. Dann besteht das Verfahren in der höchsten Abstraktionsstufe wie in Figur 4 gezeigt aus den 3 Blöcken 406, 407 und 408. Modul 406 vergleicht die Aufprallgeschwindigkeit mit einer Schwelle und berechnet so aus der Aufprallgeschwindigkeit, ob der Gurtstraffer überhaupt aktiviert werden soll. Das Modul 407 ermittelt aus dem Versatz und dem Winkel mit Hilfe der Kraftcharakteristik die Kraft des Gurtstraffers. In Modul 408 wird aus den Versatz- und Winkeldaten, die aktuell und in dem zurückliegenden Zeitraum erhoben worden sind, berechnet, ob die in Modul 407 berechnete Gurtkraft reduziert werden kann oder nicht. Die Länge des zurückliegenden Zeitraums ist parametrisierbar.

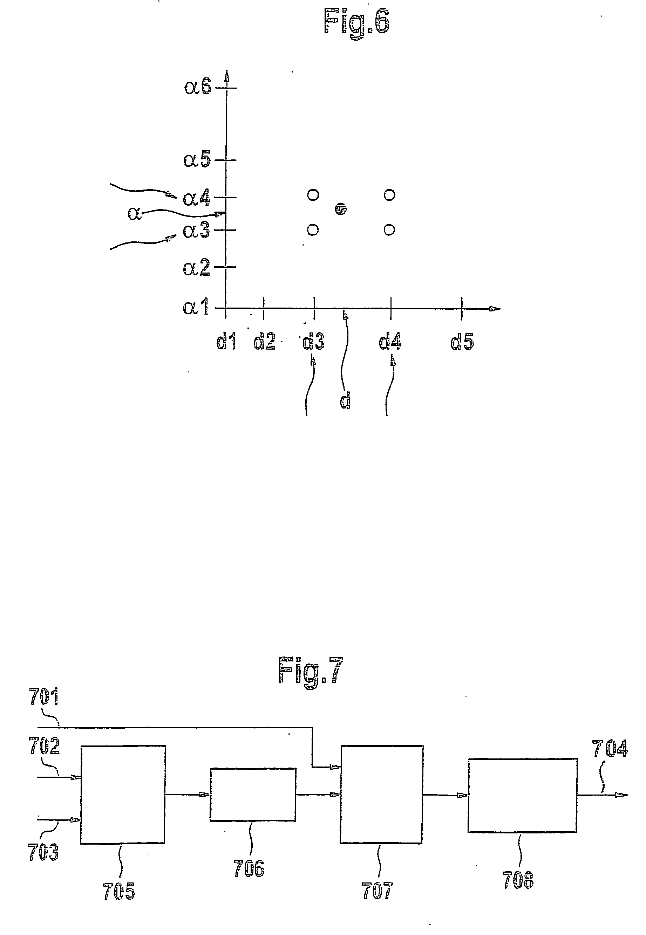

In Figur 5 ist die Funktionsweise von Block 407 detaillierter dargestellt. Die Eingangsparameter sind der Versatz 501, der Winkel 502 und die Geschwindigkeit 503 und der Ausgang 504 ist die Kraft ohne Berücksichtigung der möglichen Reduktion. In Modul 505 wird in Abhängigkeit der Geschwindigkeit der minimal einzuhaltende Abstand 506 berechnet, so dass mit Sicherheit ein Aufprall ausgeschlossen werden kann. Wie in Figur 6 dargestellt ist, werden für den aus Versatz und Winkel definierten Punkt die 4 Nachbarpunkte im Gitter berechnet. Zu diesen 4 Nachbarpunkten wird die jeweilige Gurtkraft aus einer zu parametrisierenden Gurtkrafttabelle abgelesen und über 508 dem Modul 509 zur Verfügung gestellt.

Der detaillierte Aufbau des Moduls 408 aus Figur 4 zur Reduktion der Gurtkraft ist in Figur 7 zu sehen. Eingänge sind die nicht reduzierte Kraft 701, der Versatz 702 und der Winkel 703. Ausgang ist die eventuell reduzierte Gurtkraft 704. Zunächst werden in Modul 705 die aktuellen Werte über den Versatz und Winkel mit den Werten aus dem zurückliegenden Zeitraum verglichen. Die zurückliegenden Werte können beispielsweise in einem Ringspeicher abgelegt sein. Nach dem Vergleich werden die aktuellen Werte der Liste der zurückliegenden Werte angehangen und es werden die am weitesten zurückliegenden Werte durch diese ersetzt. Durch die einzelnen Vergleiche entsteht eine Signalfolge, die angibt, ob eine Übereinstimmung der aktuellen Werte mit einem in der Vergangenheit erhobenen Wertepaar vorliegt oder nicht. In Block 706 wird überprüft, ob die aktuelle Messung in der Vergangenheit wiederholt und in regelmäßigen Abständen aufgetreten ist. Ist dies der Fall, dann wird in Modul 707 die Gurtkraft reduziert. Dies kann ein- oder mehrstufig erfolgen und das Maß der Reduktion ist applizierbar. Falls ein Objekt aufgetreten ist, das ein höheres Gefahrenpotenzial darstellt, so wird die Reduktion sofort aufgehoben und die Gurtkraft dem Gefahrenpotenzial entsprechend verstärkt. Dies geschieht in Modul 708.

## Patentansprüche

1. Verfahren zur Ansteuerung eines Rückhaltemittels (6, 7) in einem Fahrzeug, wobei wenigstens ein Parameter anhand von Daten von einer Precrashsensorik (1-3) ermittelt wird, wobei die Intensität der Ansteuerung des Rückhaltemittels (6, 7) abhängig von der Größe von Parametern ist, **dadurch gekennzeichnet, dass** die Parameter der Versatz des zu erwartenden Auftreffpunktes von der Fahrzeuglängsachse und die zu erwartenden Auftreffgeschwindigkeit und der Auftreffwinkel und der Aufprallzeitpunkt sind und dass die Intensität reduziert wird, wenn periodisch Objekte erkannt werden.

2. Vorrichtung zur Steuerung eines Rückhaltemittels in einem Fahrzeug mit einer Steuereinheit (5) zur Ermittlung wenigstens eines Parameters anhand von Daten einer Precrashsensorik (1-3), welche wenigstens ein Ausgangssignal zur Ansteuerung des Rückhaltemittels in Abhängigkeit von dem wenigstens einen Parameter ausgibt, wobei Mittel (4) vorhanden sind, die derart konfiguriert sind, dass die Intensität der Ansteuerung des Rückhaltemittels (6, 7) abhängig von der Größe von Parametern ist, **dadurch gekennzeichnet, dass** die Parameter wenigstens der Versatz und wenigstens die zu,e rwartende Auftreffgeschwindigkeit und der Auftreffwinkel und der Aufprallzeitpunkt sind und dass die Vorrichtung die Intensität reduziert, wenn mittels der Precrashsensorik periodisch Objekte erkannt werden.

3. Vorrichtung nach Anspruch 2, **dadurch gekennzeichnet, dass** das Rückhaltemittel (6, 7) ein reversibles Rückhaltemittel ist.

## Claims

1. Method for actuating a restraint means (6, 7) in a vehicle, with at least one parameter being determined using data from a precrash sensor system (1-3), the intensity with which the restraint means (6, 7) is actuated being a function of the magnitude of parameters, **characterized in that** the parameters are the offset of the expected point of impact from the longitudinal axis of the vehicle, the expected impact speed, the impact angle, and the collision time, and **in that** the intensity is reduced when objects are periodically identified.

2. Apparatus for actuating a restraint means in a vehicle, having a control unit (5) for determining at least one parameter using data from a precrash sensor system (1-3) which transmits at least one output signal for actuating the restraint means as a function of the at least one parameter, the said apparatus having means (4) which are configured in such a way that the intensity with which the restraint means (6, 7) is actuated is a function of the magnitude of parameters, **characterized in that** the parameters are at least the offset, at least the expected impact speed, the impact angle, and the collision time, and **in that** the apparatus reduces the intensity when objects are periodically identified by means of the precrash sensor system.

3. Apparatus according to Claim 2, **characterized in that** the restraint means (6, 7) is a reversible restraint means.

## Revendications

1. Procédé de commande d'un moyen de retenue (6, 7) dans un véhicule, dont au moins un paramètre est déterminé à l'aide de données provenant d'un système de détection de pré-collision (1-3), l'intensité de la commande du moyen de retenue (6, 7) étant dépendante de l'importance des paramètres,
**caractérisé en ce que**
les paramètres sont le décalage du point de collision à prévoir par rapport à l'axe longitudinal du véhicule, la vitesse de collision à prévoir, l'angle de collision et l'instant de la collision, et on réduit l'intensité lorsque des objets sont détectés périodiquement.

2. Dispositif de commande d'un moyen de retenue dans un véhicule, comprenant une unité de commande (5) pour déterminer au moins un paramètre à l'aide de données provenant d'un système de détection de pré-collision (1-3) qui émet au moins un signal de sortie pour la commande du moyen de retenue en fonction d'au moins un paramètre, et des moyens (4) configurés de telle sorte que l'intensité de la commande du moyen de retenue (6, 7) dépende de l'importance des paramètres,
**caractérisé en ce que**
les paramètres sont le décalage et la vitesse de collision à prévoir, l'angle de collision et l'instant de la collision, et le dispositif réduit l'intensité lorsque des objets sont détectés périodiquement au moyen du système de détection de pré-collision.

3. Dispositif selon la revendication 2,
**caractérisé en ce que**
le moyen de retenue (6, 7) est un moyen de retenue réversible.
